# EUROPÄISCHE PATENTSCHRIFT

(11) **EP 3 736 228 B1**
(45) Veröffentlichungstag und Bekanntmachung des Hinweises auf die Patenterteilung: **16.02.2022**
(21) Anmeldenummer: 19172933.4
(22) Anmeldetag: 07.05.2019
(51) Int. Cl.: B65D 65/46, B65D 85/804

(54) **KAPSEL ZUR ZUBEREITUNG EINES GETRÄNKES, VERFAHREN ZUM HERSTELLEN DERSELBEN UND VERWENDUNG DIESER KAPSEL**
CAPSULE FOR PREPARING A BEVERAGE, METHOD OF PRODUCING THE SAME AND USE OF THE CAPSULE
CAPSULE POUR LA PRÉPARATION D'UNE BOISSON, MÉTHODE POUR LA FABRICATION D'UNE TELLE CAPSULE ET UTILISATION DE CETTE CAPSULE

(43) Veröffentlichungstag der Anmeldung: 11.11.2020
(73) Patentinhaber: Swiss Coffee Innovation AG, 4600 Olten (CH)
(72) Erfinder: NICKEL Dr., Axel, 30966 Hemmingen (DE)
(74) Vertreter: Hepp Wenger Ryffel AG

(56) Entgegenhaltungen:
- EP-A1- 1 327 663
- EP-A1- 3 059 066
- EP-A1- 3 225 566
- WO-A1-2018/042339

## Beschreibung

Die vorliegende Erfindung betrifft eine ein Material, wie beispielsweise Getränkepulver, enthaltende Kapsel, welche insbesondere für die Zubereitung eines Getränkes, wie Kakao, Tee oder Kaffee, geeignet ist. Zudem betrifft die vorliegende Erfindung ein Verfahren zur Herstellung einer solchen Kapsel sowie die Verwendung einer solchen Kapsel.

Bei der portionsweisen Zubereitung von Getränken, insbesondere von gebrühtem Kaffee, wurden in den vergangenen Jahren neben Kaffeepads zunehmend Kaffeekapseln verwendet, deren Kapselwände üblicherweise aus Edelstahl, Aluminium oder Kunststoff gefertigt sind. Solche Kapseln erlauben es, Kaffeepulver über einen längeren Zeitraum ohne Aromaverlust zu lagern. Zudem erlauben solche Kapseln eine schnelle und bedienerfreundliche Herstellung einer Kaffeeportion mit gewünschter Geschmacksrichtung, indem eine Kapsel mit gewünschter Kaffeesorte in eine daran angepasste Kaffeemaschine eingesetzt wird, in welcher dann heißes Wasser durch die Kapsel gepresst und daraus gebrühter Kaffee hergestellt wird. Allerdings sind derartige Kapseln unter anderem aufgrund des eingesetzten Kapselmaterials sowie der produktionsaufwendigen Kapselkonstruktion vergleichsweise teuer. Ferner sind derartige Kapseln umweltpolitisch problematisch. Zum einen sind die Kapseln nicht wiederverwertbar und werden vom Verbraucher nach dem Gebrauch in der Regel als Restmüll entsorgt. Ein Recycling von Kaffeekapseln findet daher praktisch nicht statt, was insbesondere bei Kaffeekapseln auf Aluminiumbasis bedenklich ist, da die Aluminiumherstellung sehr energieintensiv ist, wodurch sich bei solchen Kapseln eine besonders schlechte CO₂-Bilanz ergibt.

Ein weiterer großer Nachteil ist, dass derartige Kapseln biologisch nicht abbaubar sind und somit auch nicht biologisch entsorgt werden können. In Anbetracht der Tatsache, dass allein in Deutschland pro Jahr weit über 4 Milliarden Kaffeekapseln verbraucht werden, ist dies ein ernstzunehmendes Problem.

Dieselben Probleme sind auch mit anderen Verpackungen verbunden, wie Transportpackungen, Lebensmittelverpackungen und dergleichen.

Um die vorstehenden Probleme für derartige Kapseln zumindest teilweise zu umgehen, sind bereits Kapseln aus alternativen Materialien vorgeschlagen worden.

Aus der DE 10 2014 000 187 B4 ist eine Kapsel bekannt, welche aus einem Pressling aus einem cellulosischem Pulver, wie insbesondere aus Kaffeepulver, besteht, wobei der Pressling mit einer aus einem biologisch abbaubaren Material zusammengesetzten Schicht ummantelt ist. Bei der Ummantelungsschicht handelt es sich bevorzugt um eine Flüssigcellulose, die aus einem Polysaccharid oder einem Derivat davon in Verbindung mit einem polyolen Spacer und dem zugehörigem Vernetzer besteht.

In der EP 3 115 316 B1 wird eine Kapsel, insbesondere zur Zubereitung eines Getränkes aus Getränkepulver, insbesondere von Kaffee aus Kaffeepulver, durch Einbringen von Wasser in die Kapsel, offenbart, wobei die Kapsel einen Pressling aus einem wenigstens ein Polysaccharid enthaltendem Pulver umfasst, wobei der Pressling mit wenigstens einer Beschichtungsschicht ummantelt ist, wobei die wenigstens eine Beschichtungsschicht ein vernetztes Polysaccharid umfasst, wobei das vernetzte Polysaccharid durch Vernetzen eines Polysaccharids mit einem Vernetzungsmittel ohne die Verwendung eines polyolen Abstandshalters erhalten wurde.

In der EP 3 225 566 B1 wird eine Kapsel, insbesondere zur Zubereitung eines Getränkes aus Getränkepulver, insbesondere von Kaffee aus Kaffeepulver, durch Einbringen von Wasser in die Kapsel, offenbart, wobei die Kapsel aus einem wenigstens ein Polysaccharid enthaltendem Kapselkörper besteht, der mit einem wenigstens ein Polysaccharid enthaltendem Pulver befüllt ist, wobei der Kapselkörper mit wenigstens einer Beschichtungsschicht ummantelt ist, wobei die wenigstens eine Beschichtungsschicht ein vernetztes Polysaccharid umfasst, wobei das vernetzte Polysaccharid durch Vernetzen eines Polysaccharids mit einem Vernetzungsmittel erhalten wurde.

Weitere Kapseln sind aus EP1327663, WO2018/042339 und EP3059066 bekannt.

Diese Kapseln sind biologisch einfach abbaubar und somit umweltschonend. Allerdings sind der Aromaschutz bzw. die Sauerstoffdichtheit der aus biologischen Quellen stammenden Umhüllungen verbesserungsbedürftig. Durch mehrfaches Beschichten kann zwar die Dichtheit erhöht werden, in der Regel müssen aber zusätzlich Sekundärverpackungen eingesetzt werden, die einen ausreichenden Aromaschutz und Sauerstoffdichtheit aufweisen.

Ausgehend davon liegt der vorliegenden Erfindung die Aufgabe zugrunde, eine Kapsel insbesondere für die portionsweise Zubereitung von Getränken aus Getränkepulver, wie Kakao, Tee und Kaffee, bereit zu stellen, welche nicht nur einfach und kostengünstig herstellbar, biologisch abbaubar und daher umweltfreundlich zu entsorgen ist, sondern welche den Kapselinhalt auch über einen längeren Zeitraum vor nennenswerten Aromaverlusten schützt und eine Geschmacksveränderung durch eine durch Sauerstoff bewirkte Oxidation vermeidet.

Erfindungsgemäß wird diese Aufgabe gelöst durch eine Kapsel, insbesondere zur Zubereitung eines Getränkes aus Getränkepulver, insbesondere von Kaffee aus Kaffeepulver, durch Einbringen von Wasser in die Kapsel, enthaltend einen aus wenigstens einem Polysaccharid zusammengesetzten Kapselkörper, der mit einem Material befüllt ist, wobei der Kapselkörper mit wenigstens einer ersten

Beschichtungsschicht ummantelt ist, wobei die wenigstens eine erste Beschichtungsschicht wenigstens einen Polyvinylalkohol und/oder ein Polyvinylalkoholcopolymer enthält, dadurch gekennzeichnet, dass die erste Beschichtungsschicht eine Dicke von 0,5 µm bis 10 µm und bevorzugt von 1 µm bis 2 µm aufweist.

Ein großer Vorteil dieser Lösung ist, dass eine derartige Kapsel aus einem aus wenigstens einem Polysaccharid zusammengesetzten Kapselkörper, der mit einem Material befüllt ist, wobei der Kapselkörper mit wenigstens einer ersten Beschichtungsschicht ummantelt ist, wobei die wenigstens eine erste Beschichtungsschicht wenigstens einen Polyvinylalkohol und/oder ein Polyvinylalkoholcopolymer enthält, umweltfreundlich entsorgbar ist sowie ferner einen Transportschutz und Anfassschutz aufweist. Zudem beruht diese Lösung auf der Erkenntnis, dass eine derartige Kapsel alle notwendigen Eigenschaften aufweist, welche für deren Verwendung zur portionsweisen Zubereitung von Getränken, wie Kaffee, erforderlich sind. Insbesondere kann die Kapsel aufgrund ihrer hohen Stabilität, welche dieser einen ausreichend hohen Transportschutz und Anfassschutz verleiht, selbst hohe Drücke, wie sie bei der Zubereitung eines Brühgetränkes auftreten können, aufnehmen. Abgesehen davon schützt die erfindungsgemäße Kapsel den Kapselinhalt aufgrund der wenigstens einen ersten Beschichtungsschicht aus Polyvinylalkohol und/oder Polyvinylalkoholcopolymer auch über einen längeren Zeitraum, ohne dass ein Aromaverlust, geschweige denn ein nennenswerter Aromaverlust, auftritt und schützt diese auch vor einer Geschmacksveränderung durch eine durch Sauerstoff bewirkte Oxidation, weil sich die wenigstens eine Beschichtungsschicht aus Polyvinylalkohol und/oder Polyvinylalkoholcopolymer durch eine hervorragend geringe Gasdurchlässigkeit auszeichnet. Abgesehen davon ist die erfindungsgemäße Kapsel einfach und kostengünstig herstellbar. Besonders wesentlich ist zudem, dass sowohl der Kapselkörper als auch die wenigstens eine erste Beschichtungsschicht nicht toxisch und biologisch abbaubar sind.

Bezüglich des Materials, mit welchem der Kapselkörper der erfindungsgemäßen Kapsel befüllt ist, ist die vorliegende Erfindung nicht besonders limitiert.

Insbesondere kann das Material bei Raumtemperatur eine Flüssigkeit, eine Paste oder ein Feststoff sein. Beispiele für Flüssigkeiten sind Kondensmilch, Säfte und dergleichen, wohingegen Beispiele für geeignete Feststoffe Kekse, Brot und dergleichen und Beispiele für geeignete Pasten Zahnpasta, Marmelade, Joghurt und dergleichen sind. Gute Ergebnisse werden insbesondere erhalten, wenn der Kapselkörper mit einem Polysaccharid enthaltenden Material befüllt ist, welches bevorzugt als Getränkepulver geeignet ist. Besonders geeignete Beispiele hierfür sind solche, welche aus der Gruppe ausgewählt sind, welche aus Kaffee, Tee, Trinkschokolade, Kakao und Milchpulver besteht. Gute Ergebnisse werden insbesondere erhalten, wenn der Kapselkörper mit gemahlenem Kaffeepulver befüllt ist.

Polysaccharid ist in diesem Sinne sehr breit zu verstehen und umfasst alle Saccharide, in denen zwei oder mehr Monosaccharide über glycosidische Bindung(en) verbunden sind. Mithin umfasst der Begriff Polysaccharid im Sinne der vorliegenden Patentanmeldungen insbesondere auch Bi-, Tri- oder Tetrasaccharide, wie das Disaccharid Milchzucker, welcher wesentlicher Bestandteil von Milchpulver ist.

Gemäß einer ersten Ausführungsform der vorliegenden Erfindung ist die mindestens eine erste Beschichtungsschicht vollständig oder zumindest weitgehend aus einem oder mehreren Polyvinylalkoholen und/oder einem oder mehreren Polyvinylalkoholcopolymeren zusammengesetzt. Beispielsweise kann die mindestens eine erste Beschichtungsschicht zu wenigstens 50 Gew.-%, bevorzugt zu wenigstens 75 Gew.-%, besonders bevorzugt zu wenigstens 90 Gew.-%, ganz besonders bevorzugt zu wenigstens 98 Gew.-% und höchst bevorzugt vollständig aus einem oder mehreren Polyvinylalkoholen und/oder einem oder mehreren Polyvinylalkoholcopolymeren zusammengesetzt sein.

Zur Einstellung der gewünschten mechanischen Eigenschaften kann die mindestens eine erste Beschichtungsschicht zusätzlich zu dem einen oder mehreren Polyvinylalkoholen und/oder einen oder mehreren Polyvinylalkoholcopolymeren andere Bestandteile enthalten, wie insbesondere ein oder mehr Additive. Gemäß dieser Ausführungsform ist die wenigstens eine erste Beschichtungsschicht vorzugsweise zu wenigstens 50 Gew.-% und besonders bevorzugt zu wenigstens 75 Gew.-% aus einem oder mehreren Polyvinylalkoholen und/oder einem oder mehreren Polyvinylalkoholcopolymeren zusammengesetzt und enthält ferner ein oder mehrere Additive, wie bevorzugt wenigstens ein Additiv ausgewählt aus der Gruppe bestehend aus Talk, Glycerin, Polyethylenglykol und beliebigen Mischungen aus zwei oder mehr der vorgenannten Additive enthält. Durch das Einmischen von Glycerin oder Polyethylenglykol kann die Elastizität der mindestens einen ersten Beschichtungsschicht verbessert werden und durch die Zugabe von Talk die mechanische Stabilität der mindestens einen erste Beschichtungsschicht auf einen gewünschten Wert eingestellt werden.

Um eine ausreichend niedrige Gasdurchlässigkeit zu erreichen, weist erfindungsgemäß die wenigstens eine erste Beschichtungsschicht eine Dicke von 0,5 bis 10 µm, bevorzugt von 1 bis 5 µm und besonders bevorzugt von 1 bis 2 µm auf.

Das Merkmal, dass die Kapsel wenigstens eine erste Beschichtungsschicht aufweist, heißt, dass die Kapsel ein oder zwei oder mehrere miteinander verbundene Schichten aus wenigstens einem Polyvinylalkohol und/oder einem Polyvinylalkoholcopolymer enthält, also eine entsprechende Einzelschicht oder ein Laminat aus zwei oder mehr aufeinander aufgebrachten Schichten. Wenn die Kapsel zwei oder mehr erste Beschichtungsschichten aufweist, ist die vorstehend genannte Dicke die Gesamtdicke aller ersten Beschichtungsschichten.

Vorzugsweise weist die Kapsel 1 bis 5, besonders bevorzugt 1 bis 3, ganz besonders bevorzugt 1 oder 2 und höchst bevorzugt eine Schicht(en) enthaltend jeweils wenigstens einen Polyvinylalkohol und/oder ein Polyvinylalkoholcopolymer auf.

Gute Ergebnisse werden insbesondere erhalten, wenn die wenigstens eine erste Beschichtungsschicht der Kapsel wenigstens einen Polyvinylalkohol und/oder ein Polyvinylalkoholcopolymer enthält, welches ein mit Gelpermeationschromatographie unter Verwendung eines Polystyrolstandards gemessenes gewichtsgemitteltes Molekulargewicht von 9.000 bis 120.000 g/mol und bevorzugt von 13.000 bis 30.000 g/mol aufweist. Solche Polyvinylalkohole bzw. Polyvinylalkoholcopolymere bilden Schichten mit ausreichend niedriger Gasdurchlässigkeit und sind zudem leicht zu verarbeiten, da sie in Wasser zu Lösungen bzw. Dispersionen mit einer geeigneten Viskosität bilden, so dass diese einfach durch Eintauchen des Kapselkörpers in die Losung bzw. Dispersion auf den Kapselkörper aufgebracht werden können.

Aus den vorstehenden Gründen ist es bevorzugt, Polyvinylalkohol und/oder Polyvinylalkoholcopolymer einzusetzen, welcher in einer 4%igen wässrigen Lösung bei 20°C eine gemäß der DIN 53015 gemessene Viskosität von 3 bis 110 mPa•s und besonders bevorzugt von 3 bis 20 mPa•s aufweist.

Gemäß einer besonders bevorzugten Ausführungsform der vorliegenden Erfindung werden das Material der wenigstens einen ersten Beschichtungsschicht sowie deren Dicke so eingestellt, dass die erste Beschichtungsschicht(en) bei einer Schichtdicke von 1 bis 2 µm eine Gasdurchlässigkeit von weniger als 3 cm³/m²/Tag/ 1,01325 MPa, bevorzugt von weniger als 2 cm³/m²/Tag/ 1,01325 MPa und besonders bevorzugt von weniger als 1 cm³/m²/Tag/ 1,01325 MPa aufweist.

Die Kapsel kann durch die wenigstens eine erste Beschichtungsschicht teilflächig oder vollflächig ummantelt sein. Um den Effekt der wenigstens einen erste Beschichtungsschicht in einem gewünschten Ausmaß zu erreichen, ist es bevorzugt, dass der Kapselkörper durch die wenigstens eine erste Beschichtungsschicht vollflächig ummantelt ist.

In Weiterbildung des Erfindungsgedankens wird es vorgeschlagen, die äußerste der wenigstens einen ersten Beschichtungsschicht aus Polyvinylalkohol bzw. Polyvinylalkoholcopolymer mit wenigstens einer zweiten Beschichtungsschicht zu ummanteln, wobei die wenigstens eine zweite Beschichtungsschicht ein Polysaccharid umfasst. Dadurch kann zum einen ein etwaiges Lösen von Polyvinylalkohol bzw. Polyvinylalkoholcopolymer aus der Kapsel bei Kontakt der Kapsel mit Wasser oder einer anderen Flüssigkeit vermieden werden, und können zudem die mechanischen Eigenschaften, wie Stabilität, der Kapsel auf einen gewünschten Wert eingestellt werden.

Das Merkmal, dass die Kapsel wenigstens eine zweite Beschichtungsschicht aufweist, heißt, dass die Kapsel ein oder zwei oder mehrere miteinander verbundene Schichten aus wenigstens einem Polysaccharid enthält, also eine entsprechende Einzelschicht oder ein Laminat aus zwei oder mehr aufeinander aufgebrachten Schichten. Wenn die Kapsel zwei oder mehr zweite Beschichtungsschichten aufweist, ist die vorstehend genannte Dicke die Gesamtdicke aller Schichten.

Um z.B. die Stabilität der Kapsel zu erhöhen, ist es bevorzugt, dass die wenigstens eine zweite Beschichtungsschicht ein vernetztes Polysaccharid umfasst, welches durch Vernetzen eines Polysaccharids mit einem Vernetzungsmittel erhalten wurde.

Grundsätzlich ist die vorliegende Erfindung bezüglich der chemischen Natur des Polysaccharids der wenigstens einen zweiten Beschichtungsschicht nicht limitiert. Gute Ergebnisse werden insbesondere erhalten, wenn das Polysaccharid der wenigstens einen zweiten Beschichtungsschicht aus der Gruppe ausgewählt ist, welche aus Stärke, Cellulose, Chitin, Carrageen, Agar und Alginaten besteht. Besonders bevorzugt ist das Polysaccharid der wenigstens einen zweiten Beschichtungsschicht ein Carrageen oder ein Alginat, wobei es ganz besonders bevorzugt ist, dass das Polysaccharid der wenigstens einen zweiten Beschichtungsschicht ein Alginat ist. Diese Polysaccharide verursachen keine Verfälschung des Geschmacks während der Zubereitung des Getränks. Zudem hat es sich gezeigt, dass Kapselkörper aus Polysaccharid mit Alginat einfach und kostengünstig ummantelt werden können. Dabei sind Alginate biologisch abbaubar und liefern eine hinreichend stabile Ummantelung und schützen den Kapselinhalt, ohne dass ein nennenswerter Aromaverlust auftritt. Ferner hat es sich gezeigt, dass Alginate in der Lage sind, die Wasserhärte herabzusetzen. Zudem wird dadurch ein unangenehmer Säuregeschmack verhindert oder zumindest abgemildert.

Erfindungswesentlich ist, dass das Polysaccharid der wenigstens einen zweiten Beschichtungsschicht vernetzt ist. Dabei kann die Vernetzung des Polysaccharids gemäß einer Ausführungsform der vorliegenden Erfindung über kovalente Bindungen erfolgen. Eine Vernetzung über kovalente Bindungen ermöglicht sehr beständige Ummantelungen. Dabei erfolgt die Vernetzung über kovalente Bindungen üblicherweise durch die Reaktion des Polysaccharids mit einem geeigneten Vernetzer. Als Vernetzer eignen sich insbesondere difunktionelle organische Verbindungen, wobei die funktionellen Gruppen beispielsweise aus der Gruppe ausgewählt sind, die aus Carbonsäuren, Salzen von Carbonsäuren, aktivierten Carbonsäuren, Aminen, Alkoholen, Aldehyden und Ketonen besteht. Unter aktivierten Carbonsäuren werden in diesem Zusammenhang Carbonsäurehalogenide, Aktivester von Carbonsäuren, Anhydride von Carbonsäuren oder andere reaktive Derivate von Carbonsäuren verstanden.

Dabei kann die Vernetzung ohne die Verwendung eines Abstandshalters bzw. Spacers durchgeführt und insbesondere ohne einen polyolen Spacer durchgeführt werden.

Allerdings kann die Vernetzung auch mit einem Abstandshalter und insbesondere mit einem polyolen Abstandshalter durchgeführt werden. Der polyole Abstandshalter ist bevorzugt ein aliphatisches, cyclisches oder aromatisches Polyol und besonders bevorzugt Ethylenglycol, Propantriol, Triethylenglycol, Polyethylenglycol, Sorbit, Glucose, Fructose, Galactose, Cyanidin, Corilagin, Digallussäure, Gallussäure oder Tanninsäure. Durch den polyolischen Abstandshalter wird eine gewisse Elastizität der Beschichtungsschicht erreicht und es kann die Wasseraufnahme und Dampfdurchlässigkeit gezielt beeinflusst werden.

Gemäß einer alternativen und besonders bevorzugten Ausführungsform der vorliegenden Erfindung ist das Polysaccharid der wenigstens einen zweiten Beschichtungsschicht über ionische und/oder koordinative Bindungen vernetzt. Derartige über ionische und/oder koordinative Bindungen vernetzte Polysaccharide lassen sich besonders einfach herstellen und beeinträchtigen nicht die biologische Abbaubarkeit des verwendeten Polysaccharids. Die ionische und/oder koordinative Vernetzung kann beispielsweise mittels Polysacchariden erreicht werden, welche anionische Gruppen, wie Carboxylatgruppen oder Sulfonatgruppen, aufweisen. Durch Einbringen zweiwertiger oder höherwertiger Kationen, insbesondere Erdalkalimetallionen, erfolgt dann eine ionische bzw. koordinative Vernetzung der anionischen Gruppen des Polysaccharids, um eine stabile ummantelnde Schicht auszubilden.

Eine koordinative Bindung bezeichnet in diesem Zusammenhang eine Wechselwirkung zwischen einem Elektronenpaardonator und einem Elektronenpaarakzeptor, wie sie beispielsweise zwischen freien Elektronenpaaren von Sauerstoffatomen in Hydroxygruppen und Kationen stattfinden kann.

Ganz besonders bevorzugt handelt es sich bei dem vernetzten Polysaccharid um ein Erdalkalimetallalginat und höchst bevorzugt um ein Calciumalginat. In diesem Fall sind die Calciumionen der Vernetzer, da sie koordinative bzw. ionische Bindungen mit Gruppen des Alginats eingehen. Es wurde im Rahmen der vorliegenden Erfindung überraschenderweise herausgefunden, dass eine Ummantelung, welche Calciumalginat umfasst, eine wasserunlösliche Schicht bereitstellt, die den Geschmack des aus der Kapsel hergestellten Getränks nicht beeinträchtigt und eine ausreichende Stabilität der Kapsel bereitstellt, um einen Transport- und Anfassschutz sicherzustellen, ohne dass der Kapselinhalt einen nennenswerten Aromaverlust erleidet. Zudem ist Calciumalginat biologisch hervorragend abbaubar. Ein weiterer Vorteil ist, dass es sich bei Calciumalginat um einen zugelassenen Lebensmittelzusatzstoff mit der E-Nummer E405 handelt und daher gesundheitlich unbedenklich ist.

In Weiterbildung des Erfindungsgedankens wird vorgeschlagen, dass die wenigstens eine zweite Beschichtungsschicht Fasern enthält, um so die mechanische Stabilität der wenigstens einen zweiten Beschichtungsschicht zu erhöhen. Dabei kann es sich bei den Fasern bevorzugt um Polysaccharidfasern handeln, da diese biologisch abbaubar sind, wobei insbesondere mit Cellulosefasern, wie Baumwollfasern, gute Ergebnisse erhalten werden. Die Fasern sind bevorzugt Langfasern, und zwar vorzugsweise solche mit einer Länge von wenigstens 100 µm, bevorzugt wenigstens 1 mm und besonders bevorzugt wenigstens 5 mm. Diese Langfasern können dann hohe Zugkräfte in der Schicht aufnehmen.

Alternativ zu Fasern oder auch zusätzlich zu Fasern können in der wenigstens einen zweiten Beschichtungsschicht Garne oder Gewebe aus solchen Fasern vorgesehen sein.

Grundsätzlich kann die erfindungsgemäße Kapsel lediglich eine zweite Beschichtungsschicht aus vernetztem Polysaccharid umfassen. Um die Stabilität der Kapsel und somit die Transportsicherheit und den Anfassschutz zu erhöhen, wird es in Weiterbildung des Erfindungsgedankens vorgeschlagen, dass die erfindungsgemäße Kapsel zwei oder mehr zweite Beschichtungsschichten umfasst. Vorzugsweise ist der Kapselkörper der Kapsel mit 2 bis 100, besonders bevorzugt mit 2 bis 20, ganz besonders bevorzugt mit 2 bis 10 und höchst bevorzugt mit 2 bis 5 zweiten Beschichtungsschichten, also mit Polysaccharid enthaltenden Beschichtungsschichten, ummantelt. Durch die Ummantelung des Kapselkörpers der Kapsel mit zwei oder mehr zweiten Beschichtungsschichten wird auch die Wirkung der Beschichtung als Sauerstoffbarriere sowie die damit verbundene Bereitstellung eines wirksamen Aromaschutzes in besonders hohem Ausmaß erreicht.

Gemäß einer weiteren besonders bevorzugten Ausführungsform der vorliegenden Erfindung besteht die zweite Beschichtung des Kapselkörpers aus 2 bis 100, bevorzugt 2 bis 20, besonders bevorzugt 2 bis 10 und höchst bevorzugt 2 bis 5 Calciumalginatschichten, welche optional Cellulosefasern enthalten.

Die einzelnen zweiten Beschichtungsschichten weisen, je nach Viskosität der Natriumalginatlösung und dem eingesetzten Verfahren, Dicken zwischen 40 und 600 µm auf. Besonders bevorzugt sind Schichtdicken von 70 bis 300 µm für die erste Schicht anzusehen, da sie den optimalen Kompromiss zwischen Stabilität und Trocknungsgeschwindigkeit aufweisen. Nachfolgende Beschichtungsschichten sind vorzugsweise dünner und liegen bevorzugt zwischen 40 und 200 µm, um eine schnelle Trocknung zu ermöglichen.

Dabei ist eine dünne zweite Beschichtungsschicht bevorzugt, um das im Gel enthaltene Wasser leichter zu entfernen, und, um ein möglichst schnelles Eindiffundieren des Vernetzungsmittels, d.h. der Calciumionen, in das Natriumalginat zu erleichtern. Prinzipiell ließe sich die Geschwindigkeit des Eindiffundierens der Calciumionen in das Natriumalginat auch durch eine höhere Konzentration des Vernetzungsmittels erhöhen; allerdings haben sich bei der praktischen Umsetzung dieser Variante dünne Beschichtungsdicken als vorteilhaft für die Geschwindigkeit des Eindiffundierens und die Handhabung erwiesen.

Zwar ist es grundsätzlich möglich, den Kapselkörper der erfindungsgemäßen Kapsel nur teilweise mit der wenigstens einen zweiten Beschichtungsschicht zu ummanteln. Allerdings ist es bevorzugt, dass der Kapselkörper von der wenigstens einen zweiten Beschichtungsschicht vollflächig ummantelt ist.

Gemäß einer alternativen Ausführungsform der vorliegenden Erfindung ist der Kapselkörper aus einer oder mehreren Schichten aus unvernetztem Polysaccharid zusammengesetzt. Bei dieser Ausführungsform ist es bevorzugt, den Kapselkörper aus einem faserigen Polysaccharid vorzusehen, um dem Kapselkörper die geeignete mechanische Stabilität zu verleihen. Bei dem faserigen Polysaccharid kann es sich insbesondere um Fasermaterial aus Stärke, Cellulose, Chitin, Carrageen, Agar und Alginaten handeln. Besonders bevorzugt ist Fasermaterial aus Cellulosefasern, da diese sich neben einer hohen Verfügbarkeit durch niedrige Preise und hohe Festigkeiten auszeichnen. Besonders bevorzugte Fasermaterialien, aus denen der Kapselkörper zusammengesetzt ist, sind Papier, Pappe und Karton. Vorzugsweise beträgt die Dicke des Kapselkörpers 0,1 bis 10 mm, bevorzugt 0,25 bis 2,5 mm und besonders bevorzugt 0,5 bis 1,5 mm.

Gemäß einer dazu alternativen bevorzugten Ausführungsform der vorliegenden Erfindung ist der Kapselkörper aus einer oder mehreren Schichten aus vernetztem Polysaccharid zusammengesetzt. Bei dieser Ausführungsform ist es bevorzugt, dass der Kapselkörper aus einer oder mehreren Schichten aus vernetztem Polysaccharid zusammengesetzt ist. Vorzugsweise ist der Kapselkörper aus einer oder mehreren Schichten aus Alginat zusammengesetzt. Dabei ist es besonders bevorzugt, wenn das Alginat ein Erdalkalimetallalginat, insbesondere Calciumalginat ist, das optional Cellulosefasern enthält.

Gemäß einer dazu alternativen bevorzugten Ausführungsform der vorliegenden Erfindung kann der Kapselkörper auch aus einer oder mehreren Schichten aus unvernetztem Polysaccharid und einer oder mehreren darauf aufgebrachten Schichten aus vernetztem Polysaccharid zusammengesetzt sein. Bei dieser Ausführungsform ist es bevorzugt, dass das Polysaccharid enthaltende Material, mit welchem der Kapselkörper befüllt ist, als Pressling vorliegt, wobei der Pressling vorzugsweise durch Pressen von mit einem Druck von 0,01 bis 1.000 MPa, bevorzugt 0,05 bis 500 MPa, besonders bevorzugt 0,1 bis 100 MPa, weiter bevorzugt 0,5 bis 100 MPa, noch weiter bevorzugt 1 bis 100 MPa, ganz besonders bevorzugt 5 bis 50 MPa und höchst bevorzugt 15 bis 30 MPa erhalten worden ist.

Ein weiterer Gegenstand der vorliegenden Erfindung ist ein Verfahren zum Herstellen einer Kapsel nach einem der vorstehenden Ansprüche, welches die folgenden Schritte umfasst:
i) Bereitstellen eines aus einem aus wenigstens einem Polysaccharid zusammengesetzten Kapselkörpers, der mit einem Material befüllt ist,
ii) Benetzen wenigstens eines Teils und vorzugsweise der gesamten Oberfläche des in dem Schritt i) bereitgestellten Kapselkörpers mit einer Lösung eines Polyvinylalkohols und/oder eines Polyvinylalkoholcopolymers in einem Lösungsmittel oder mit einer Dispersion eines Polyvinylalkohols und/oder eines Polyvinylalkoholcopolymers in einem Dispergiermittel,
iii) Trocknen des in dem Schritt ii) erhaltenen Kapselkörpers und
iv) optional Wiederholen der Schritte ii) bis iii) für 1 bis 10 mal, bevorzugt 1 bis 5 mal und besonders bevorzugt 1 bis 3 mal.

Vorzugsweise wird der Kapselkörper in dem Schritt i) bereitgestellt, indem ein unvernetztes Polysaccharid, bevorzugt Papier, Pappe oder Karton, mit einem Polysaccharid enthaltendem Pulver befüllt wird.

Ferner ist es bevorzugt, dass der Kapselkörper in dem Schritt i) bereitgestellt wird, indem ein Teil und vorzugsweise die gesamte Oberfläche eines Presslings aus einem Polysaccharid enthaltendem Pulver mit einer Lösung eines Polysaccharids in einem Lösungsmittel oder mit einer Dispersion eines Polysaccharids in einem Dispergiermittel benetzt wird, danach mit wenigstens einem Vernetzungsmittel in Kontakt gebracht wird und anschließend getrocknet wird.

Alternativ dazu ist es bevorzugt, dass der Kapselkörper in dem Schritt i) bereitgestellt wird, indem ein unvernetztes Polysaccharid, bevorzugt Papier, Pappe oder Karton, mit einem Polysaccharid enthaltendem Pulver befüllt wird, und danach ein Teil und vorzugsweise die gesamte Oberfläche des befüllten unvernetzten Polysaccharids mit einer Lösung eines Polysaccharids in einem Lösungsmittel oder mit einer Dispersion eines Polysaccharids in einem Dispergiermittel benetzt wird, danach mit wenigstens einem Vernetzungsmittel in Kontakt gebracht wird und anschließend getrocknet wird.

Vorzugsweise wird ein Teil und besonders bevorzugt die gesamte Oberfläche des in dem Schritt iii) oder iv) erhaltenen Kapselkörpers mit einer Lösung eines Polysaccharids in einem Lösungsmittel oder mit einer Dispersion eines Polysaccharids in einem Dispergiermittel benetzt, danach mit wenigstens einem Vernetzungsmittel in Kontakt gebracht wird und anschließend getrocknet, wobei optional diese Schritte für 1 bis 10 mal, bevorzugt 1 bis 5 mal und besonders bevorzugt 1 bis 3 mal wiederholt werden.

Ein weiterer Gegenstand der vorliegenden Erfindung ist die Verwendung der erfindungsgemäßen Kapsel zum Herstellen eines Getränks durch in Kontakt bringen der erfindungsgemäßen Kapsel mit Wasser. Vorzugsweise enthält die Kapsel ein Material, welches aus der Gruppe ausgewählt ist, welche aus Kaffee, Tee, Trinkschokolade, Kakao und Milchpulver besteht.

Die Verwendung der erfindungsgemäßen Kapsel zur Herstellung eines Kaffeegetränks erlaubt die portionsweise Zubereitung des Getränks je nach anfallendem Bedarf. Ein besonderer Vorteil der erfindungsgemäßen Verwendung ist, dass nur biologisch abbaubarerer Abfall entsteht.

Bei der Verwendung der erfindungsgemäßen Kapsel zur Zubereitung eines Getränkes, insbesondere Kaffeegetränkes, wird die Kaffeekapsel bevorzugt zerdrückt oder perforiert, bevor anschließend eine Extraktion der zerdrückten bzw. perforierten Kaffeekapsel mit Wasser erfolgt.

Nachfolgend wird die vorliegende Erfindung anhand dreier die Erfindung illustrierenden, aber nicht einschränkenden Beispiele erläutert.

### Beispiel 1

6,5 g gemahlener Röstkaffee wurden mit einer Presse zu einem kugelförmigen Pressling verpresst. Der erhaltene kugelförmige Pressling wurde in eine 1,5 Gew.%-ige wässrige Natriumalginatlösung getaucht und nach 1 bis 2 Sekunden wieder aus der Natriumalginatlösung entnommen. Nach der Entnahme des Presslings aus der Natriumalginatlösung wurde dieser mit einer 5 Gew.-%-igen CaCl₂ Lösung besprüht. Anschließend wurde der Pressling für 15 Minuten bei Raumtemperatur im Luftstrom getrocknet.

Es wurde eine aus einem Pressling mit einer ummantelnden Schicht aus Calciumalginat bestehende Kapsel erhalten.

Die erhaltene Kapsel wurde in eine 5 gew.%-ige wässrige Polyvinylalkohollösung (Kuraray Exceval AQ-4104) getaucht und nach 1 bis 2 Sekunden wieder aus der Polyvinylalkohollösung entnommen. Nach der Entnahme der Kapsel wurde diese für 5 Minuten bei Raumtemperatur im Luftstrom getrocknet.

Es wurde eine kugelförmige Kapsel erhalten, die vollflächig ummantelt war, keine Risse oder Löcher aufwies und eine Schichtdicke für Polyvinylalkohol im Bereich von unter 5 µm aufweist.

Es zeigte sich, dass diese dünne Schicht aus Polyvinylalkohol bereits zur Erzielung einer sehr hohen Sauerstoffdichtheit ausreichend ist.

### Beispiel 2

Es wurde eine Kaffeekapsel wie in dem Beispiel 1 hergestellt. Danach wurde diese Kapsel in eine 1,5 Gew.%-ige wässrige Natriumalginatlösung getaucht und nach 1 bis 2 Sekunden wieder aus der Natriumalginatlösung entnommen. Nach der Entnahme der Kapsel aus der Natriumalginatlösung wurde diese mit einer 5 Gew.-%-igen CaCl₂ Lösung besprüht. Anschließend wurde die Kapsel für 15 Minuten bei Raumtemperatur im Luftstrom getrocknet.

Es wurde eine Kapsel erhalten, die durch die äußere Calciumalginatschicht an Festigkeit gewonnen hatte und die beim Brühvorgang verhinderte, dass das Polyvinylalkohol aus der Zwischenschicht in Lösung gehen konnte.

### Beispiel 3

Aus Pappmachee wurde ein becherförmiger Kapselkörper mit oberem Randabschluss geformt und getrocknet. Dieser Kapselgrundkörper wurde mit 6,5 g gemahlenem Röstkaffee befüllt. Der gefüllte Kapselkörper wurde danach mit einem Papierdeckel verschlossen, der mit einer Methylcellulose auf dem Kapselkörperrand verklebt wurde. Die so verschlossene Kapsel wurde in eine 1,5 Gew.%-ige wässrige Natriumalginatlösung getaucht und nach 1 bis 2 Sekunden wieder aus der Natriumalginatlösung entnommen. Nach der Entnahme der Kapsel aus der Natriumalginatlösung wurde diese mit einer 5 Gew.-%-igen CaCl₂ Lösung besprüht. Anschließend wurde die Kapsel für 15 Minuten bei Raumtemperatur im Luftstrom getrocknet.

Es wurde eine aus einem aus Papier geformten Grundkörper, der mit Kaffeemehl befüllt war, mit einer ummantelnden Schicht aus Calciumalginat bestehende Kapsel erhalten.

Die erhaltene Kapsel wurde in eine 5 gew.%-ige wässrige Polyvinylalkohollösung (Kuraray Exceval AQ-4104) getaucht und nach 1 bis 2 Sekunden wieder aus der Polyvinylalkohollösung entnommen. Nach der Entnahme der Kapsel wurde diese für 5 Minuten bei Raumtemperatur im Luftstrom getrocknet.

Es wurde eine becherförmige Kapsel erhalten, die vollflächig ummantelt war, keine Risse oder Löcher aufwies und eine Schichtdicke für Polyvinylalkoholim Bereich von unter 5 µm aufweist.

Es zeigte sich, dass diese dünne Schicht aus Polyvinylalkohol bereits zur Erzielung einer sehr hohen Sauerstoffdichtheit ausreichend ist.

## Patentansprüche

1. Kapsel, insbesondere zur Zubereitung eines Getränkes aus Getränkepulver, insbesondere von Kaffee aus Kaffeepulver, durch Einbringen von Wasser in die Kapsel, enthaltend einen aus wenigstens einem Polysaccharid zusammengesetzten Kapselkörper, der mit Material befüllt ist, wobei der Kapselkörper mit wenigstens einer ersten Beschichtungsschicht ummantelt ist, wobei die wenigstens eine erste Beschichtungsschicht wenigstens einen Polyvinylalkohol und/oder ein Polyvinylalkoholcopolymer enthält, **dadurch gekennzeichnet, dass** die erste Beschichtungsschicht eine Dicke von 0,5 µm bis 10 µm und bevorzugt von 1 µm bis 2 µm aufweist.

2. Kapsel nach Anspruch 1, **dadurch gekennzeichnet, dass** das Material, mit dem der Kapselkörper befüllt ist, ein Polysaccharid enthaltendes Material ist, welches vorzugsweise aus der Gruppe ausgewählt ist, welche aus Kaffee, Tee, Trinkschokolade, Kakao und Milchpulver besteht.

3. Kapsel nach zumindest einem der vorstehenden Ansprüche, **dadurch gekennzeichnet, dass** die wenigstens eine erste Beschichtungsschicht wenigstens einen Polyvinylalkohol und/oder ein Polyvinylalkoholcopolymer enthält, welches ein mit Gelpermeationschromatographie unter Verwendung eines Polystyrolstandards gemessenes gewichtsgemitteltes Molekulargewicht von 9.000 bis 120.000 g/mol und bevorzugt von 13.000 bis 30.000 g/mol aufweist.

4. Kapsel nach zumindest einem der vorstehenden Ansprüche, **dadurch gekennzeichnet, dass** die wenigstens eine erste Beschichtungsschicht bei einer Schichtdicke von 1 bis 2 µm eine Gasdurchlässigkeit von weniger als 3 cm³/m²/Tag/ 1,01325 MPa, bevorzugt von weniger als 2 cm³/m²/Tag/ 1,01325 MPa und besonders bevorzugt von weniger als 1 cm³/m²/Tag/ 1,01325 MPa aufweist.

5. Kapsel nach zumindest einem der vorstehenden Ansprüche, **dadurch gekennzeichnet, dass** die wenigstens eine erste Beschichtungsschicht 1 bis 5, bevorzugt 1 bis 3, besonders bevorzugt 1 oder 2 und höchst bevorzugt eine Schicht(en) enthaltend jeweils wenigstens einen Polyvinylalkohol und/oder ein Polyvinylalkoholcopolymer umfasst.

6. Kapsel nach zumindest einem der vorstehenden Ansprüche, **dadurch gekennzeichnet, dass** die äußerste der wenigstens einen ersten Beschichtungsschicht mit wenigstens einer zweiten Beschichtungsschicht ummantelt ist, wobei die wenigstens eine zweite Beschichtungsschicht ein Polysaccharid umfasst.

7. Kapsel nach Anspruch 6, **dadurch gekennzeichnet, dass** die wenigstens eine zweite Beschichtungsschicht ein vernetztes Polysaccharid umfasst, welches aus der Gruppe ausgewählt ist, welche aus Stärke, Cellulose, Chitin, Carrageen, Agar und Alginaten besteht.

8. Kapsel nach Anspruch 7, **dadurch gekennzeichnet, dass** das Polysaccharid der wenigstens einen zweiten Beschichtungsschicht ein Alginat, bevorzugt ein Erdalkalimetallalginat und besonders bevorzugt Calciumalginat ist.

9. Kapsel nach Anspruch 7 oder 8, **dadurch gekennzeichnet, dass** die wenigstens eine zweite Beschichtungsschicht Fasern, bevorzugt Cellulosefasern, enthält.

10. Kapsel nach zumindest einem der vorstehenden Ansprüche, **dadurch gekennzeichnet, dass** der Kapselkörper aus einer oder mehreren Schichten aus unvernetztem Polysaccharid, bevorzugt aus Cellulose und besonders bevorzugt aus Papier, Pappe oder Karton zusammengesetzt ist.

11. Kapsel nach zumindest einem der Ansprüche 1 bis 9, **dadurch gekennzeichnet, dass** der Kapselkörper aus einer oder mehreren Schichten aus vernetztem Polysaccharid, bevorzugt aus Alginat, besonders bevorzugt einem Erdalkalimetallalginat und höchst bevorzugt Calciumalginat zusammengesetzt ist.

12. Kapsel nach zumindest einem der vorstehenden Ansprüche, **dadurch gekennzeichnet, dass** das Polysaccharid enthaltende Material, mit welchem der Kapselkörper befüllt ist, als Pressling vorliegt, wobei der Pressling vorzugsweise durch Pressen von mit einem Druck von 0,01 bis 1.000 MPa, bevorzugt 0,05 bis 500 MPa, besonders bevorzugt 0,1 bis 100 MPa, weiter bevorzugt 0,5 bis 100 MPa, noch weiter bevorzugt 1 bis 100 MPa, ganz besonders bevorzugt 5 bis 50 MPa und höchst bevorzugt 15 bis 30 MPa erhalten worden ist.

13. Verfahren zum Herstellen einer Kapsel nach einem der vorstehenden Ansprüche, welches die folgenden Schritte umfasst:
i) Bereitstellen eines aus einem aus wenigstens einem Polysaccharid zusammengesetzten Kapselkörpers, der mit einem Material befüllt ist,
ii) Benetzen wenigstens eines Teils und vorzugsweise der gesamten Oberfläche des in dem Schritt i) bereitgestellten Kapselkörpers mit einer Lösung eines Polyvinylalkohols und/oder eines Polyvinylalkoholcopolymers in einem Lösungsmittel oder mit einer Dispersion eines Polyvinylalkohols und/oder eines Polyvinylalkoholcopolymers in einem Dispergiermittel,
iii) Trocknen des in dem Schritt ii) erhaltenen Kapselkörpers und
iv) optional Wiederholen der Schritte ii) bis iii) für 1 bis 10 mal, bevorzugt 1 bis 5 mal und besonders bevorzugt 1 bis 3 mal.

14. Verwendung einer Kapsel nach einem der Ansprüche 1 bis 12 zum Herstellen eines Getränks und vorzugsweise von Kaffee, Tee, Trinkschokolade, Kakao oder eines Milchpulvergetränkes.

## Claims

1. Capsule, in particular for preparing a beverage from beverage powder, in particular coffee from coffee powder, by introducing water into the capsule, comprising a capsule body composed of at least one polysaccharide and filled with material, said capsule body being coated with at least one first coating layer, said at least one first coating layer comprising at least one polyvinyl alcohol and/or polyvinyl alcohol copolymer, **characterized in that** said first coating layer has a thickness of from 0.5 µm to 10 µm and preferably from 1 µm to 2 µm.

2. Capsule according to claim 1, **characterized in that** the material with which the capsule body is filled is a polysaccharide-containing material preferably selected from the group consisting of coffee, tea, drinking chocolate, cocoa and milk powder.

3. Capsule according to at least one of the preceding claims, **characterized in that** the at least one first coating layer comprises at least one polyvinyl alcohol and/or polyvinyl alcohol copolymer having a weight average molecular weight, as measured by gel permeation chromatography using a polystyrene standard, of from 9,000 to 120,000 g/mol and preferably from 13,000 to 30,000 g/mol.

4. Capsule according to at least one of the preceding claims, **characterized in that** the at least one first coating layer has a gas permeability of less than 3 cm ³/m²/day/ 1.01325 MPa, preferably of less than 2 cm³/m ²/day/ 1.01325 MPa and particularly preferably of less than 1 cm ³/m²/day/ 1.01325 MPa, at a layer thickness of 1 to 2 µm.

5. Capsule according to at least one of the preceding claims, **characterized in that** the at least one first coating layer comprises 1 to 5, preferably 1 to 3, most preferably 1 or 2, and most preferably layer(s) each comprising at least one polyvinyl alcohol and/or polyvinyl alcohol copolymer.

6. Capsule according to at least one of the preceding claims, **characterized in that** the outermost of the at least one first coating layer is coated with at least one second coating layer, wherein the at least one second coating layer comprises a polysaccharide.

7. Capsule of claim 6, **characterized in that** the at least one second coating layer comprises a crosslinked polysaccharide selected from the group consisting of starch, cellulose, chitin, carrageenan, agar and alginates.

8. Capsule according to claim 7, **characterized in that** the polysaccharide of the at least one second coating layer is an alginate, preferably an alkaline earth metal alginate and particularly preferably calcium alginate.

9. Capsule according to claim 7 or 8, **characterized in that** the at least one second coating layer comprises fibers, preferably cellulose fibers.

10. Capsule according to at least one of the preceding claims, **characterized in that** the capsule body is composed of one or more layers of uncrosslinked polysaccharide, preferably cellulose and particularly preferably paper, cardboard or paperboard.

11. Capsule according to at least one of claims 1 to 9, **characterized in that** the capsule body is composed of one or more layers of crosslinked polysaccharide, preferably alginate, particularly preferably an alkaline earth metal alginate and most preferably calcium alginate.

12. Capsule according to at least one of the preceding claims, **characterized in that** the polysaccharide-containing material with which the capsule body is filled is present as a compact, the compact preferably having been obtained by pressing at a pressure of 0.01 to 1,000 MPa, preferably 0.05 to 500 MPa, more preferably 0.1 to 100 MPa, further preferably 0.5 to 100 MPa, still more preferably 1 to 100 MPa, most preferably 5 to 50 MPa and most preferably 15 to 30 MPa.

13. A method of manufacturing a capsule according to any one of the preceding claims, comprising the steps of:
i) providing a capsule body composed of at least one polysaccharide filled with a material,
ii) wetting at least a part and preferably the entire surface of the capsule body provided in step i) with a solution of a polyvinyl alcohol and/or a polyvinyl alcohol copolymer in a solvent or with a dispersion of a polyvinyl alcohol and/or a polyvinyl alcohol copolymer in a dispersant,
iii) drying the capsule body obtained in step ii), and
iv) optionally repeating steps ii) to iii) for 1 to 10 times, preferably 1 to 5 times and particularly preferably 1 to 3 times.

14. Use of a capsule according to any one of claims 1 to 12 for preparing a beverage and preferably coffee, tea, drinking chocolate, cocoa or a powdered milk beverage.

## Revendications

1. Capsule, en particulier pour la préparation d'une boisson à partir de poudre de boisson, en particulier de café à partir de poudre de café, par introduction d'eau dans la capsule, contenant un corps de capsule composé d'au moins un polysaccharide, qui est rempli de matériau, le corps de capsule étant enrobé d'au moins une première couche d'enrobage, ladite au moins une première couche d'enrobage contenant au moins un alcool polyvinylique et/ou un copolymère d'alcool polyvinylique, **caractérisé en ce que** la première couche d'enrobage présente une épaisseur de 0,5 µm à 10 µm et de préférence de 1 µm à 2 µm.

2. Capsule selon la revendication 1, **caractérisée en ce que** le matériau avec lequel le corps de la capsule est rempli est un matériau contenant un polysaccharide, de préférence choisi dans le groupe constitué par le café, le thé, le chocolat à boire, le cacao et le lait en poudre.

3. Capsule selon au moins l'une des revendications précédentes, **caractérisée en ce que** ladite au moins une première couche d'enrobage contient au moins un alcool polyvinylique et/ou un copolymère d'alcool polyvinylique qui a une masse moléculaire moyenne en poids, mesurée par chromatographie par perméation de gel en utilisant un étalon de polystyrène, de 9 000 à 120 000 g/mol et de préférence de 13 000 à 30 000 g/mol.

4. Capsule selon au moins l'une des revendications précédentes, **caractérisée en ce que** ladite au moins une première couche d'enrobage présente, pour une épaisseur de couche de 1 à 2 µm, une perméabilité aux gaz inférieure à 3 cm³/m²/jour/ 1,01325 MPa, de préférence inférieure à 2 cm³/m ²/jour/ 1,01325 MPa et de manière particulièrement préférée inférieure à 1 cm³/m ²/jour/ 1,01325 MPa.

5. Capsule selon au moins l'une des revendications précédentes, **caractérisée en ce que** la au moins une première couche d'enrobage comprend 1 à 5, de préférence 1 à 3, de manière particulièrement préférée 1 ou 2 et de manière très préférée une ou des couches contenant chacune au moins un alcool polyvinylique et/ou un copolymère d'alcool polyvinylique.

6. Capsule selon au moins l'une des revendications précédentes, **caractérisée en ce que** la plus externe de ladite au moins une première couche d'enrobage est enrobée d'au moins une deuxième couche d'enrobage, ladite au moins une deuxième couche d'enrobage comprenant un polysaccharide.

7. Capsule selon la revendication 6, **caractérisée en ce que** ladite au moins une deuxième couche d'enrobage comprend un polysaccharide réticulé choisi dans le groupe constitué par l'amidon, la cellulose, la chitine, la carraghénane, l'agar et les alginates.

8. Capsule selon la revendication 7, **caractérisée en ce que** le polysaccharide d'au moins une deuxième couche d'enrobage est un alginate, de préférence un alginate de métal alcalino-terreux et de manière particulièrement préférée un alginate de calcium.

9. Capsule selon la revendication 7 ou 8, **caractérisée en ce que** la au moins une deuxième couche d'enrobage contient des fibres, de préférence des fibres de cellulose.

10. Capsule selon au moins l'une des revendications précédentes, **caractérisée en ce que** le corps de la capsule est composé d'une ou plusieurs couches de polysaccharide non réticulé, de préférence de cellulose et de manière particulièrement préférée de papier, papier cartonné ou de carton.

11. Capsule selon au moins l'une des revendications 1 à 9, **caractérisée en ce que** le corps de la capsule est composé d'une ou plusieurs couches de polysaccharide réticulé, de préférence d'alginate, de manière particulièrement préférée d'un alginate de métal alcalino-terreux et de manière très préférée d'alginate de calcium.

12. Capsule selon au moins l'une des revendications précédentes, **caractérisée en ce que** le matériau contenant le polysaccharide, avec lequel le corps de la capsule est rempli, se présente sous la forme d'un comprimé, le comprimé ayant été obtenu de préférence par compression à une pression de 0,01 à 1000 MPa, de préférence de 0,05 à 500 MPa, de manière particulièrement préférée de 0,1 à 100 MPa, de manière plus préférée de 0,5 à 100 MPa, de manière encore plus préférée de 1 à 100 MPa, de manière tout à fait préférée de 5 à 50 MPa et de manière très préférée de 15 à 30 MPa.

13. Procédé de fabrication d'une capsule selon l'une quelconque des revendications précédentes, comprenant les étapes suivantes :
i) fournir un corps de capsule composé d'au moins un polysaccharide et rempli d'un matériau,
ii) mouiller au moins une partie et de préférence la totalité de la surface du corps de capsule fourni à l'étape i) avec une solution d'un alcool polyvinylique et/ou d'un copolymère d'alcool polyvinylique dans un solvant ou avec une dispersion d'un alcool polyvinylique et/ou d'un copolymère d'alcool polyvinylique dans un agent dispersant,
iii) sécher le corps de la capsule obtenu à l'étape ii), et
iv) éventuellement répéter les étapes ii) à iii) de 1 à 10 fois, de préférence de 1 à 5 fois et de manière particulièrement préférée de 1 à 3 fois.

14. Utilisation d'une capsule selon l'une quelconque des revendications 1 à 12 pour la préparation d'une boisson et, de préférence, de café, de thé, de chocolat à boire, de cacao ou d'une boisson à base de poudre de lait.
